# EUROPÄISCHE PATENTANMELDUNG

(11) **EP 0 729 774 A2**
(43) Veröffentlichungstag der Anmeldung: **04.09.1996**
(21) Anmeldenummer: 96102392.6
(22) Anmeldetag: 17.02.1996
(51) Int. Cl.: B01D 29/01, B01D 35/02

(54) **Formkörper mit Filtervorrichtung**

(30) Priorität: 03.03.1995 DE 19507485
(71) Anmelder: HOECHST AKTIENGESELLSCHAFT, 65929 Frankfurt am Main (DE)
(72) Erfinder: Buchberger, Horst, D-65779 Kelkheim (DE); Czyborra, Ludger, Dr., D-52064 Aachen (DE); Reitzel, Gunter, Dipl.-Ing., D-65468 Trebur (DE)

(57) **Zusammenfassung**

Ein Formkörper mit Filtervorrichtung und ein Filter, bestehend aus einem einzigen thermoplastischen Kunststoffmaterial, und ein Verfahren zur Befestigung des Filtermaterials werden beschrieben. Die Erzeugnisse dienen vornehmlich zur Reinigung von Mineralöl, Heizöl oder Kraftstoffen.

Da keine Fremdmaterialien vorhanden sind, lassen sich die Erzeugnisse leicht und problemlos einem Recyclisierungsverfahren unterwerfen.

## Beschreibung

Die Erfindung betrifft einen Formkörper mit einer integrierten Filtervorrichtung, wobei Formkörper und Filtervorrichtung aus demselben thermoplastischen Kunststoff gebildet werden.

In Kraftfahrzeugen sind druckerzeugende Elemente der Einspritzpumpe und Einspritzdüsen mit einer Genauigkeit von wenigen Tausendstel Millimeter aufeinander abgestimmt. Dies bedeutet, daß Verunreinigungen im Kraftstoff, welche diese Größe erreichen, den Verschleiß fördern bzw. die Funktion der feinbearbeiteten Teile gefährden können. Eine schlechte Filterung kann deshalb zu Schäden an Pumpenkomponenten, Druckventilen und Einspritzdüsen führen. Dabei werden in der Regel zwei unterschiedliche Filter eingesetzt. Einmal ein etwas groberer Vorfilter, häufig ein Gewebe, das mit der Tankgebereinheit verbunden ist und vor der Kraftstofförderpumpe sitzt. Darüber hinaus sitzt zwischen der Kraftstofförderpumpe und den Folgekomponenten Druckregelventil, Einspritzdüsen und gegebenenfalls zusätzlicher Einspritzpumpe ein feinerer Hauptfilter. Die Folgen eines starken Verschleißes sind: ungünstige Verbrennung, hoher Kraftstoffverbrauch, Rauchbildung, schlechtes Starten, unruhiger Leerlauf und geringere Leistung des Motors.

Die Reinigung des Kraftstoffs ist also von großer Wichtigkeit und muß durch spezielle, den Erfordernissen der einzelnen Komponenten angepaßte Filter erfolgen. Nach Art der Verwendung unterscheidet man deshalb Einfachfilter, Stufenfilter und Parallelfilter jeweils mit und ohne Wasserspeicher.

Bei Vorfiltern sind zwei Bauformen verbreitet.

Bei einer Bauform ist das Filter in einen Stützkörper integriert. Das Filter besteht oft aus einem Polyamid-Gewebe, das mit einem anderen Kunststoff, das den Stützkörper bildet, umspritzt wird. Die Fertigung ist aufwendig, da das Filter in das Spritzgießwerkzeug eingelegt werden muß. Dies geschieht häufig manuell. Darüber hinaus erweist sich die Abdichtung des Übergangs vom Stützkörper auf das Filtergewebe als problematisch, da unterschiedliche Materialien sich in vielen Fällen schlecht verbinden.

Bei einer anderen, verbreiteten Bauform ist eine Gewebetasche auf einen Stützkörper gestülpt. Die Tasche ist durch Klemmen oder Verschweißung mit einem Übergangsstück verbunden. Bei einer Klemmverbindung oder einem Einschieben besteht die Gefahr, daß während des Montagevorganges das Gewebe verrutscht.

Für den Hauptfilter sind besonders Baueinheiten verbreitet, bei denen ein feinporiges Filter (mittlere Porengröße je nach Motorenkonzept ca. 5 bis 15 µm) in einem Gehäuse angeordnet ist. Als Gehäusewerkstoff wird im allgemeinen Metall oder ein thermoplastischer Kunststoff verwendet. Zwecks vollständiger Trennung der Schmutzseite von der Reinseite des Filtereinsatzes muß dieser gegenüber dem Gehäuse abgedichtet werden. Dies erfolgt meist mit Spezialklebern, zuweilen in Verbindung mit Dichtungen aus kraftstoffbeständigen Elastomeren. Ebenso ist zur Abdichtung zwischen Gehäuse und Gehäusedeckel allgemein die Verwendung einer Elastomer-Dichtung erforderlich. Das Einbringen des Klebers plus Aushärtungszeit stellen ebenso wie die Verwendung von Dichtungen aus kraftstoffbeständigen Elastomeren deutliche Kostenfaktoren dar. Nach einer bestimmten Betriebsdauer wird dieser Filtertyp als Ganzes ausgetauscht.

Andere Bauarten von Kraftstoffiltern arbeiten mit sogenannten Filtereinsätzen. Dabei handelt es sich um Ausführungen, bei denen das Filter aus Filz oder Papier zwischen einem inneren und äußeren perforierten metallischen Stützkörper angeordnet und dieser Stützkörper oben und unten durch Deckel verschlossen ist. Auch bei derartigen Filtereinsätzen muß, um die Reinseite von der Schmutzseite exakt zu separieren, mit entsprechenden Dichtungen und/oder Klebungen gearbeitet werden. Diese Baueinheit wird dann in ein Gehäuse gebracht, dessen Ober- und Unterteil durch Verschraubung miteinander verbunden sind. Nach entsprechender Betriebsdauer wird die Verschraubung gelöst und nur der Filtereinsatz ausgewechselt.

Alle bisher eingesetzten Filterausführungen zeigen den Nachteil, daß sie aus mehreren unterschiedlichen Werkstoffen bestehen und somit als Ganzes praktisch nicht recyclierbar sind. Im Rahmen der Resourcenschonung werden gegenwärtig Konzepte untersucht, bei denen durch Demontage der Altteile der benutzten Filter eine Trennung in Metall- und Nichtmetall-Anteile erfolgt. Die Metallmengen können nach bekannten Verfahren wieder aufgearbeitet werden. Bei den nicht metallischen Demontagemengen handelt es sich aber um Gemische aus Filterpapier, Filz, Klebstoffen, Elastomeren und/oder Gemischen unverträglicher Polymere, die praktisch nur per Deponie oder Verbrennung entsorgbar sind.

Es bestand daher die Aufgabe, die geschilderten Nachteile zu vermeiden.

Die Erfindung betrifft einen Formkörper mit Filtervorrichtung, wobei Formkörper, Filtervorrichtung und Filtermaterial aus demselben thermoplastischen Kunststoff bestehen.

Weiterhin betrifft die Erfindung ein Filter, das einschließlich Filtermaterial aus einem thermoplastischen Kunststoff und aus einem oder mehreren Bauteilen besteht.

Die Filtervorrichtung enthält ein Filtermaterial. Das Filtermaterial ist beispielsweise ein Gewebe, ein Vlies oder Non-woven, ein Sintermaterial wie ein Sinterkörper oder eine Sinterplatte, eine poröse Membran oder ein poröser Kunsstoffschaum, die aus einem thermoplastischen Kunststoff bestehen.

Die Filtervorrichtung oder das Filter können zur Reinigung von Gasen oder Flüssigkeiten verwendet werden. Bei der Reinigung werden Feststoffe wie feine Partikel oder Stäube abgetrennt. Die Reinigung von Kraftstoffen ist ein bevorzugtes Einsatzgebiet.

Bauteile für das Filter gemäß der Erfindung sind definitionsgemäß Gehäuse, Filtermaterial, Stütz- oder Verbindungskörper.

Thermoplastische Kunststoffe sind beispielsweise Polyolefine wie Polyethylen, Polypropylen oder Polystyrol, Polyamide, Polyester, Flüssigkristalline Polymere (LCP), Polyurethane, Polyarylensulfide wie Polyphenylensulfid, Polyacetale wie Polyoxymethylen. Thermoplastische Kunststoffe können auch Polymer-Mischungen (Blends) sein.

Polyacetale sind bevorzugte thermoplastische Kunststoffe. Besonders bevorzugte Polyacetale sind Polyoxymethylene. Polyoxymethylene umfassen Homopolymere und Copolymere, die Oxymethylen-Einheiten enthalten. Beispiele für Polyoxymethylene, deren Eigenschaften und Herstellung sind in "Ullmann's encyclopedia of industrial chemistry, B. Elvers (Ed.), 5. Auflage, Volume A21, "Polyoxymethylenes", VCH Verlagsgesellschaft, Weinheim 1992; S. 591 - 603" beschrieben, worauf hiermit Bezug genommen wird.

Polyacetale sind geeignet für die Herstellung von paßgenauen Formteilen.

Formkörper und Filter gemäß der Erfindung bestehen aus einem einzigen Material. So sind diese bei einem möglichen Recyclingprozess leichter aufarbeitbar und die Verwendung von Klebstoffen und Elastomer-Dichtungen wird vermieden. Gerade sortenreines Alt-Polyacetal läßt sich einwandfrei und problemlos wieder aufarbeiten. Somit ist sowohl die Herstellung als auch eine eventuelle Entsorgung besonders kostengünstig.

Die Herstellung der massiven Formteile, die für den Aufbau des Filters nötig sind, kann vorab durch Spritzgießen in getrennnten Arbeitsgängen erfolgen.

Die Verbindung zwischen den Bauelementen des Filters gemäß der Erfindung, bei denen ein flüssigkeitsdichter Verbund gegeben sein muß, z.B. zwischen Filtermaterial, Filterboden bzw. Filterdeckel (bei sogenannten Filtereinsätzen) und Filtermaterial, Filterstützkörpern und Gehäuse, kann durch Schweißen erfolgen. Geeignet sind grundsätzlich alle für Thermoplaste entwickelte Schweißverfahren, bevorzugt wird mit dem Heizelementschweißverfahren gearbeitet.

Das Filter gemäß der Erfindung eignet sich zum Reinigen von Mineralöl, vorzugsweise Kraftstoffen und Heizöl, aber auch andere Flüssigkeiten anorganischer oder organischer Natur können durch die Verwendung des Filters von Verunreinigungen befreit werden.

Ein weiterer Erfindungsgegenstand betrifft ein Verfahren zur Herstellung eines Filters, wobei vorab gefertigte massive Formteile, die mit erhabenen Strukturen an den dem Filtermaterial zugewandten Seiten versehen sind, an den Strukturen auf Temperaturen über den Schmelzpunkt des thermoplastischen Kunststoff erwärmt und anschließend mit dem nicht erwärmten Filtermaterial zusammengefügt werden.

Die Verschweißung eines Massivteiles mit einem aus dem gleichen Werkstoff hergestellten Filtermaterial ist allgemein nur sehr schwierig zu bewerkstelligen, da die Wärmekapazität derartiger Teile sehr unterschiedlich ist und das Filtermaterial oft sehr dünnwandig ist oder sehr feine Strukturen aufweist. Bei gleichzeitiger und/oder gleichartiger Erwärmung von Filtermaterial (z.B. Gewebe) und Filterdeckel (Massivteil) wird das Filtermaterial schnell aufgeschmolzen, wobei die Filtereigenschaften des Filtermaterials beeinträchtigt werden.

Im Formkörper oder Filter gemäß der Erfindung wird die dem Filtermaterial zugewandte Seite des Massivteiles mit erhabenen Strukturen (Rippen, Noppen, Stege, Wulste, erhabene Ränder, Stifte, Nadeln oder ähnliches) versehen. Nach deren Erwärmung auf Temperaturen über dem Schmelzpunkt des thermoplastischen Kunststoffs werden diese plastifizierten Strukturen mit dem nicht erwärmten Filtermaterial zusammengefügt. Dabei dringt das plastifizierte Material des Massivteiles teilweise oder auch vollständig in das Filtermaterial ein, erwärmt in den Berührungszonen das Filtermaterial bis über den Schmelzpunkt und führt so zu einer echten Verschweißung.

Bei der Verschweißung können auch konzentrisch verlaufende Erhebungen im Massivteil durch Erhitzen plastifiziert und danach unter Druck (zum Beispiel 0,15 N/mm²) mit dem Filtermaterial zusammengefügt werden.

Die Verbindung zwischen Massivteil und Filtermaterial muß nicht immer eine echte Verschweißung sein. Es gibt auch Fälle, wo es genügt, daß geschmolzenes Material des Massivteiles in Hohlräume oder Poren des Filtermaterials eindringt und so für eine Verankerung des Filtermaterials sorgt.

Eine Befestigung von Filtermaterial mit einem Massivteil kann auch durch Umspritzen des Filtermaterials nach üblichen Verfahren erfolgen, die dem Fachmann bekannt sind.

Das Filtermaterial kann mit einem Massivteil auch durch Einklemmen, Einschieben oder Klammerung befestigt werden, wobei jedoch alle Teile aus demselben thermoplastischen Kunststoffmaterial bestehen.

### Beispiele

### Beschreibung der Schweißversuche

Verschweißt wurden zylinderförmige Becher (Durchmesser, innen: 24 mm; außen: 30 mm; Höhe: 24 mm) mit groben und feinen Geweben. Die Becher wurden aus Polyoxymethylen (Hostaform C 9021 natur, Hoechst) spritzgegossen. Der Becher wurde mit der Öffnung von Hand gegen ein Heizelement gedrückt, bis sich im Kontaktbereich (Becherrand) Schmelze gebildet hat. Danach wurde der Becher mit der in der Tabelle 1 angegebenen Kraft auf das Gewebe gedrückt und gehalten, bis die Schmelze wieder fest geworden ist.

Variiert wurden die Schweißparameter, so daß Verbindungen unterschiedlicher Güte entstanden. Die Ergebnisse sind in der Tabelle 1 zusammengefaßt.

Für ein Verschweißen erweisen sich feine Filtergewebe als besonders geeignet.

Es wurden folgende Gewebe eingesetzt:

### Feine Gewebe

Monofilament mit Durchmesser 0,1 mm aus Polyoxymethylen-Copolymerisat. Herstellung aus der Schmelze gemäß Ullmann, Band 7, Kapitel: Fasern und Borsten, Unterkap.: Herstellung aus der Schmelze, S. 271 ff., Jahrgang 1956. Aus den Fasern wurde ein Gewebe mit dem Webmuster Leinwandbindung L 1/1 gefertigt. Die Fertigungstechnik sowie das Muster sind ebenfalls im Ullmann beschrieben: Band 17, Kap.: Textiltechnik, Unterkap.: Weberei, S. 245 ff., Webmuster: Abb.: 31, S. 246, Jahrgang 1966.

### Grobe Gewebe

Monofilament mit Durchmesser 0,17 mm aus Polyoxymethylen-Copolymerisat mit MFR (2,16; 190°C) = 2,5 g/10 min; Herstellung aus der Schmelze; Gewebe Leinwandbindung.

**Tabelle 1**

| Schweißversuche - Heizelementschweißen mit Becher/Filtergewebe, beides aus Polyoxymethylen (Temperatur Heizelement: 220°C) | | | | |
|---|---|---|---|---|
| Vers.Nr. | Durchführung | Anpressdruck | Haftung 1 = schlecht - 5 = sehr gut | |
| | | | fein | grob |
| 1 | Becherrand ca. 10 s aufgeschmolzen, dann mit dem Gewebe ca. 2 s auf das Heizelement gepresst | ca. 1 bar | 3 | 2-3 |
| 2 | Becherrand ca. 10 s aufgeschmolzen, dann mit dem Gewebe ca. 5 s auf das Heizelement gepresst | ca. 1 bar | 4 | - |
| 3 | Becherrand ca. 10 s aufgeschmolzen, dann mit dem Gewebe ca. 1.5 s auf das Heizelement gepresst | ca. 1 bar | 4-5 | - |
| 4 | Becherrand ca. 10 s aufgeschmolzen, dann mit dem Gewebe ca. 30 s auf das Heizelement gepresst | ca. 1 bar | 5 | - |
| 5 | Becherrand ca. 10 s aufgeschmolzen, dann auf vorgewärmtes Gewebe gepresst | ca. 2 bar | - | 2-3 |

## Patentansprüche

1. Formkörper mit Filtervorrichtung, wobei Formkörper, Filtervorrichtung und Filtermaterial aus demselben thermoplastischen Kunststoff bestehen.

2. Filter, das einschließlich Filtermaterial aus demselben thermoplastischen Kunststoff besteht.

3. Formkörper nach Anspruch 1 oder Filter nach Anspruch 2, dadurch gekennzeichnet, daß der thermoplastische Kunststoff ein Polyolefin, ein Polyamid, ein Polyester, ein flüssigkristallines Polymer, ein Polyurethan, ein Polyarylensulfid, ein Polyacetal oder ein Blend, das einen dieser Kunststoffe enthält, ist.

4. Filter nach Anspruch 2, dadurch gekennzeichnet, daß es aus Filtergehäuse, Gehäusedeckel, Filtermaterial, Sieb, Stützkörper und gegebenenfalls weiteren Bestandteilen besteht.

5. Formkörper nach Anspruch 1 oder Filter nach Anspruch 2, dadurch gekennzeichnet, daß ein Gewebe, Vlies, Filz, Sintermaterial, eine poröse Membran, ein Kunststoffschaum oder ein non-woven-Material als Filtermaterial enthalten ist.

6. Formkörper nach Anspruch 1 oder Filter nach Anspruch 2, dadurch gekennzeichnet, daß ein Filtermaterial durch Verschweißen oder Umspritzen befestigt ist.

7. Verfahren zur Herstellung eines Filters, dadurch gekennzeichnet, daß vorab gefertigte massive Formteile, die mit erhabenen Strukturen an den dem Filtermaterial zugewandten Seiten versehen sind, an den Strukturen auf Temperaturen über den Schmelzpunkt des thermoplastischen Kunststoffs erwärmt und anschließend mit dem nicht erwärmten Filtermaterial zusammengefügt werden.

8. Verwendung des Formkörpers nach Anspruch 1 oder des Filters nach Anspruch 2 zur Reinigung von anorganischen oder organischen Flüssigkeiten.

9. Verwendung nach Anspruch 8 zum Reinigen von Mineralöl, Kraftstoffen oder Heizöl.
